# EUROPÄISCHE PATENTSCHRIFT

(11) **EP 1 361 939 B1**
(45) Veröffentlichungstag und Bekanntmachung des Hinweises auf die Patenterteilung: **07.06.2006**
(21) Anmeldenummer: 01273770.6
(22) Anmeldetag: 23.11.2001
(51) Int. Cl.: B27L 5/06, B23Q 11/12

(54) **FURNIERMESSERMASCHINE**
VENEER SLICING MACHINE
TRANCHEUSE DE FEUILLES DE PLACAGE

(30) Priorität: 16.02.2001 DE 10107255
(43) Veröffentlichungstag der Anmeldung: 19.11.2003
(73) Patentinhaber: Grenzebach BSH GmbH, 36251 Bad Hersfeld (DE)
(72) Erfinder: MEYER, Jean, 36289 Friedewald (DE); WEPPLER, Heinrich, 36251 Ludwigsau (DE); HEINER, Armin, 36284 Hohenroda (DE)
(74) Vertreter: Frese-Göddeke, Beate
(86) Internationale Anmeldenummer: PCT/EP2001/013639
(87) Internationale Veröffentlichungsnummer: WO 2002/066213

(56) Entgegenhaltungen:
- EP-A- 0 127 175
- CH-A- 401 730
- FR-A- 1 238 130
- US-A- 2 862 532
- US-A- 4 601 317

## Beschreibung

Die Erfindung betrifft eine Furniermessermaschine gemäß dem Oberbegriff des Anspruchs 1.

Bei einer typischen Furniermessermaschine, wie sie z.B. aus der EP 0 127 175 A1 bekannt ist, wird der Tisch, auf dem ein zu schneidender Holzblock aufgespannt ist, in einer senkrechten Ebene auf und ab bewegt. Hierbei ist der Tisch mittels einer Gleitbahn und Führungsleisten geführt. Von dem Holzblock wird z.B. während der Abwärtsbewegung durch ein nach oben gerichtetes Messer ein Furnierblatt abgeschnitten. Das Messer ist zusammen mit einem Druckbalken auf einem Werkzeugschlitten montiert, der im allgemeinen während des Schnittes feststeht. In jeder Bewegungsperiode des Tisches führt der Werkzeugschlitten eine Vorschubbewegung, die der Dicke eines Furnierblattes entspricht, in Richtung des Holzblocks aus.

Die DE 25 48 164 B beschreibt eine Furniermessermaschine mit senkrecht oder annähernd senkrecht geführtem Tisch, wobei dieser im Betrieb mit einem eingespannten Holzbalken auf und ab bewegt wird. Ein Werkzeugschlitten mit Messer- und Druckbalken sowie einem Förderband zum Austragen der Furniere ist im rechten Winkel gegen den Tisch anstellbar. Die Schneide am Messerbalken ist nach unten gerichtet. Der Schnitt erfolgt während der Aufwärtsbewegung des Tisches.

Es sind auch Furniermessermaschinen mit anderen Anordnungen von Tisch und Messer bekannt.

Die DE 1 928 152 A beschreibt eine Furniermessermaschine, die geneigt angeordnet ist. Bei dieser Maschine ist die stangen- und klingentragende Anordnung, also der Werkzeugschlitten, hin und her beweglich in Ständern gelagert, wobei zwei Gleitbahnen und Führungen vorgesehen sind. Das den Holzstamm tragende Bett, also der Tisch, ist ortsfest ausgestaltet.

Die DE 25 58 487 A beschreibt eine Furniermessermaschine mit horizontaler Anordnung. In einem Rahmen ist ein waagerechter Tisch mit Mitteln zum Festhalten eines Holzblocks und darüber ein in waagerechter Richtung hin und her bewegbares Messer angeordnet. Das Messer mit Messerhalter und ein Druckbalken laufen aufschienenartigen Führungen.

Bei diesen bekannten Furniermessermaschinen wird je Hin- und Herbewegung (Hub) ein Furnierblatt vom Holzblock abgeschnitten. Die derzeit maximal erreichbare Hubzahl liegt bei ca. 90/min; hierbei erwärmen sich infolge Reibung die Gleitbahnen und die Gleitleisten sehr stark. Höhere Temperaturen als ca. 120°C sind für die Gleitbahnen und Gleitleisten nicht zulässig, weil es hier sonst zu Schädigungen durch z.B.Abriß des Schmierfilms oder durch unterschiedliche Wärmedehnung kommen kann.

Die entstehende Wärme kann derzeit nur unzureichend durch Konvektion und Schmiermittel abgeführt werden. Dies führt beim Betrieb mit der maximalen Hubzahl zu Zwangsstillständen der Maschine, in der die Gleitführungen und Gleitleisten abkühlen müssen. Dies wiederum vermindert die Leistung der Fumiermessermaschinen.

Zur Erhöhung der Leistungsfähigkeit einer Furniermessermaschine schlägt die DE 29 28 109 A vor, jeweils zwei Messer und Druckbalken auf einem Messerträger anzuordnen, so daß bei jedem Hub zwei Furnierblätter vom Holzblock abgeschnitten werden. Diese Vorrichtung hat jedoch mehrere Nachteile. Es wirken sehr viel größere Kräfte, so daß die Maschine schwerer ausgeführt werden muß. Weiterhin ist sie nur für eine horizontale oder leicht geneigte Anordnung der Maschine sowie nur bis zu bestimmten Furnierblattbreiten geeignet, weil sonst Probleme beim Abtransport der Furnierblätter infolge Überlappung auftreten können.

Aufgabe der Erfindung ist es, eine Furniermessermaschine zu schaffen, deren Leistung durch Erhöhung der maximal zulässigen Hubzahl im Dauerbetrieb und durch Erhöhung der Standzeit der Gleitführungen und Gleitleisten gesteigert ist, ohne daß die Qualität der Furnier verschlechtert wird.

Die Aufgabe ist durch die Merkmale des Anspruchs 1 gelöst.

Durch die Mittel zum Kühlen der Gleitführung kann gezielt Reibungswärme abgeführt werden. Hierdurch ist die Einschaltdauer auch unter Vollast nicht mehr beschränkt, so daß im Dauerbetrieb mit maximaler Hubzahl gefahren werden kann und so die Leistung der Maschine erhöht ist. Gleichzeitig ist infolge der niedrigeren Temperatur der Gleitführung der Verschleiß der Gleitführung und der Gleitleisten verringert, so daß weniger Wartungs- und Instandsetzungszeiten anfallen.

Ein weiterer Vorteil der Erfindung liegt darin, daß ein sehr geringes Spiel zwischen Gleitführung und Gleitleiste ausgeführt sein kann. Hierdurch ist es möglich, die Präzision der Messerführung zu erhöhen und somit die Furnierqualität zumindest auf dem üblichen hohen Niveau zu halten. Schließlich ist der Schmiermittelverbrauch an der Gleitführung reduziert.

Die Anordnung von Bohrungen in der Gleitführung ermöglicht den Einsatz günstiger Wärmeträger wie Wasser oder Kühlflüssigkeit.

Die Regelbarkeit des Durchflusses nach den Ansprüchen 2 bis 5 erlaubt die Anpassung der Wärmeabfuhr an den Bedarf.

Die Erfindung wird anhand eines vereinfacht dargestellten Beispiels einer Furniermessermaschine mit senkrechter Tischführung weiter erläutert. Es zeigen schematisch:
Figur 1 eine Seitenansicht einer Furniermessermaschine,
Figur 2 eine Ansicht des Tisches nach Figur 1
Figur 3 eine Führungsschiene waagerecht von vorne in vergrößertem Maßstab und
Figur 4 einen Querschnitt durch eine Gleitführung mit Gleitleisten als Detail.

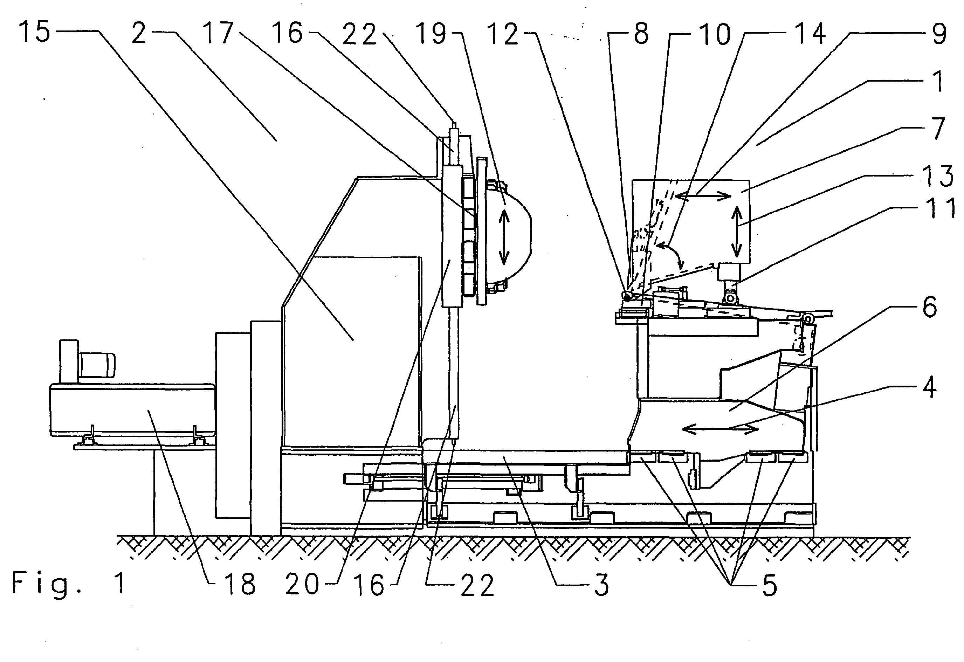

Wie aus Figur 1 ersichtlich besteht eine Messermaschine im wesentlichen aus einem Werkzeugschlitten 1 und einer Tischanordnung 2.

Der Werkzeugschlitten 1 ist auf zwei waagerecht und parallel angeordneten Schienen 3 hin und her beweglich, wie durch den Pfeil 4 symbolisiert. Hierbei ist der Werkzeugschlitten 1 mit Führungselementen 5, die an einem Maschinengestell 6 befestigt sind, mit minimalem Spiel und verdrehsicher auf den Schienen 3 geführt.

Oben auf dem Maschinengestell 6 ist ein Messerträger 7 mit einem Messer 8 so befestigt, daß er höhenverstellbar, in Richtung des Pfeiles 9 verschiebbar und um die nach unten gerichtete Schneide des Messers 8 drehbar gelagert ist. Dabei ist das Messer 8 in der Seite des Messerträgers 7, die der Tischanordnung 2 gegenüberliegt, angeordnet. Die Verschiebbarkeit des Messerträgers 7 gegenüber dem Maschinengestell 6 entsprechend den Pfeilen 9, 13 und 14, die für die Justierung seiner Lage gegenüber einem unten beschriebenen Druckbalken 12 erforderlich ist, ist über verschiedene Hydraulikzylinder gewährleistet, von denen wegen der Übersichtlichkeit nur zwei mit den Bezugszeichen 10 und 11 dargestellt sind.

Unterhalb des Messers 8 und parallel dazu ist am Maschinengestell 6 der Druckbalken 12 befestigt. Druckbalken 12 und Messer 8 sind im Betrieb so eingestellt, daß zwischen beiden ein kurzer Abstand eingehalten ist.

Auf dem Maschinengestell 6 sind weiterhin nicht dargestellte Vorrichtungen für den Austrag der geschnittenen Furnierblätter angeordnet.

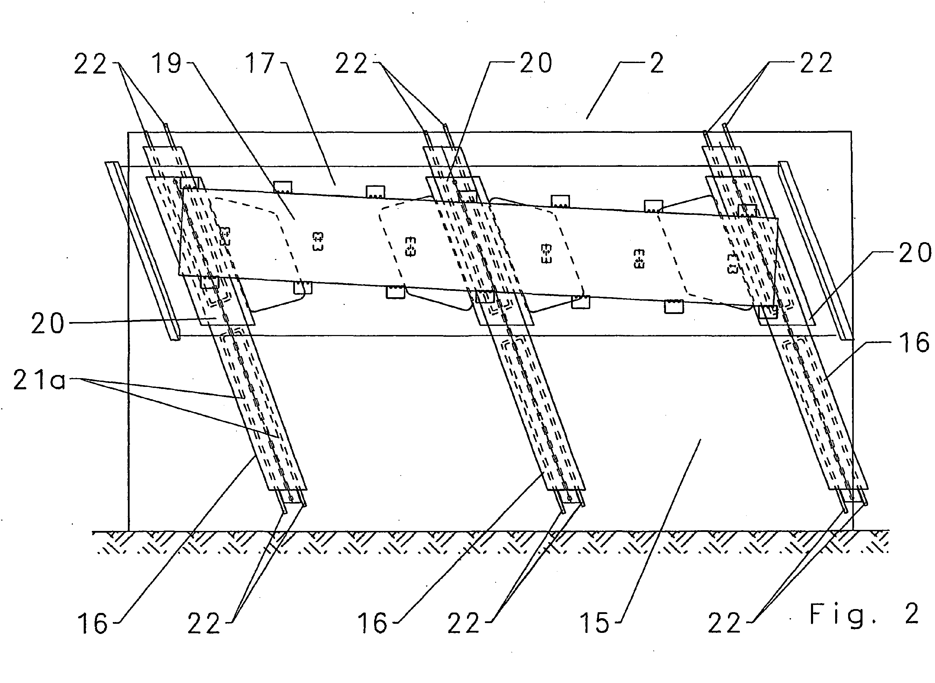

Die Tischanordnung 2, die auch aus Figur 2 ersichtlich ist, besteht im wesentlichen aus einem Maschinengestell 15, Gleitführungen 16, die starr mit dem Maschinengestell 15 verbunden sind, einem Tisch 17 und einem Antrieb mit Motor 18. Die Tischanordnung 2 ist starr auf einem Fundament befestigt und relativ zum Werkzeugschlitten 1 so angeordnet, daß die Schneide des Messers 8 und die Tischebene, auf der ein Holzbalken 19 einspannbar ist, parallel sind. Die Gleitführungen 16 sind fest mit dem Maschinengestell 15 verbunden. Sie bilden jeweils mit einer Vertikalen einen spitzen Winkel, und ihre vom Maschinengestell 15 abgewandten Flächen liegen in einer Ebene. Der Tisch 17 ist mit Hilfe von Gleitleisten 20, die aus mehreren Einzelelementen aufgebaut sind, an den Gleitführungen 16 befestigt, wobei er mittels des Antriebs in einer senkrechten Ebene längs den Gleitführungen 16 auf und ab bewegbar ist. Der Holzbalken 19 ist in üblicher Weise mittels nicht dargestellter hydraulisch betätigter Klauen auf dem Tisch 17 eingespannt.

Insoweit entspricht die Messermaschine dem Stand der Technik.

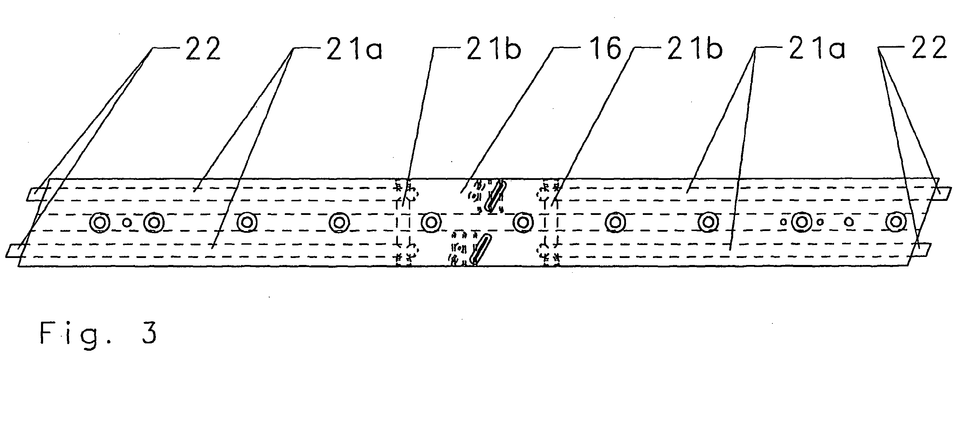

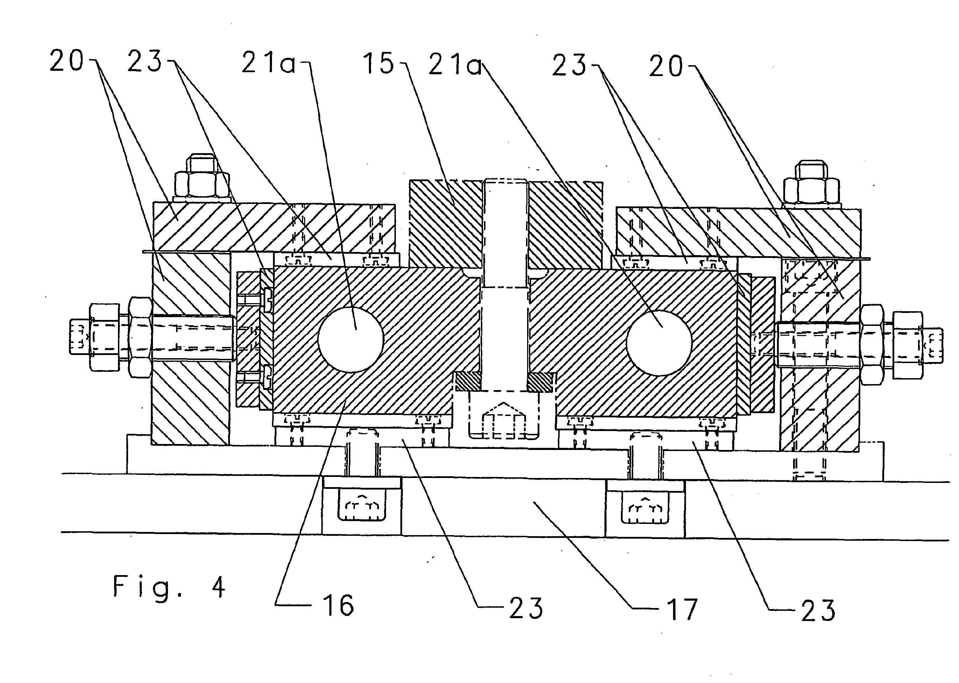

Wie aus Figur 2 und besonders aus den Figuren 3 und 4 ersichtlich, sind an den Gleitführungen 16 jeweils Mittel zu Kühlen angeordnet. Die Mittel zum Kühlen bestehen aus jeweils zwei Kühlkanälen 21 mit zugehörigen Anschlüssen 22 für die Zu- und Ableitung von Kühlmittel sowie gegebenenfalls aus nicht dargestellten Mitteln zur Kreislaufführung und Kühlung des Kühlmittels und zur Regelung.

Jeder Kühlkanal 21 ist aus zwei Bohrungen 21 a, die sich in etwa parallel zur Längsachse der Gleitführung 16 von einem Ende bis knapp zur Mitte jeder Gleitführung 16 erstrecken, und einer dazu in etwa senkrechten Bohrung 21 b ausgeführt, welche die einem Ende der Gleitführung 16 abgewandten Enden der Bohrungen 21 a verbindet. An den anderen Enden der Bohrungen 21 a sind die Anschlüsse 22 für Rohr- oder Schlauchleitungen angeordnet.

Der Tisch 17 ist an den Gleitführungen 16 mittels der Gleitleisten 20 beweglich geführt. Die Gleitleisten 20 sind starr mit dem Tisch 17 lösbar verbunden. Zwischen der Gleitleiste 20 und der Gleitführung 16 sind jeweils Verschleißelemente 23 angeordnet; sie sind so lösbar an der Gleitleiste 20 befestigt, daß das Spiel zwischen der Gleitleiste 20 und der Gleitführung 16 einstellbar ist. Hierbei ist das Spiel so klein wie möglich eingestellt, um die Präzision des Schnittes optimal zu gestalten.

Der Kühlkanal wird hergestellt, indem z.B. zunächst die Bohrungen 21 a ausgeführt werden. Die Bohrung 21 b wird als Verbindung zwischen den Bohrungen 21 a von einer Längsseite der Gleitführung 16 aus vorgetrieben, wobei die seitliche Öffnung anschließend mit einem geeigneten Pfropfen verschlossen wird. Im Querschnitt der Gleitführung 16 ist jede Bohrung 21 a so angeordnet, daß ihr Abstand zu den drei nächstgelegenen Seiten der Gleitführung 16 in etwa gleich groß ist.

Im Betrieb, der mit Ausnahme der Kühlung der Gleitführungen 16 wie aus dem Stand der Technik bekannt abläuft, ist der Werkzeugschlitten 1 zunächst auf den maximal möglichen Abstand zur Tischanordnung 2 - die sogenannte Ruheposition - zurückgefahren. Es wird ein Holzbalken 19 mit Hilfe der Klauen auf dem Tisch 17 eingespannt und der Werkzeugschlitten 1 in eine Arbeitsposition so vorgefahren, daß ein sehr geringer horizontaler Spalt zwischen dem Holzbalken 17 und der Schneide des Messers 8 bleibt. Der Antrieb für den Tisch 17 wird eingeschaltet und so der Tisch 17 auf und ab bewegt. Bei Erreichen der Soll- Hubzahl und vor einer Aufwärtsbewegung des Tisches 17 wird der Werkzeugschlitten 1 so weit in Richtung des Holzbalkens 19 vorgefahren, daß hiervon während der Aufwärtsbewegung ein Furnierblatt in der einstellbaren Solldicke abgeschnitten wird.

Sobald der Tisch 17 den oberen Umkehrbereich erreicht hat, fährt der Werkzeugschlitten 1 eine kurze Strecke zurück, so daß der Holzblock 19 während der Abwärtsbewegung das Messer 8 so eben nicht berührt. Im unteren Umkehrbereich des Tisches 17 fährt der Werkzeugschlitten 1 wieder eine Strecke vor, wobei diese Strecke der Solldicke des Furnierblattes zuzüglich der vorher genannten, zurückgefahrenen Strecke entspricht. Dieser Ablauf wird so oft wiederholt, bis so viele Furnierblätter vom Holzblock 17 abgeschnitten sind, daß nur noch ein minimal erforderlicher Rest des Holzblocks 17 übrig ist.

Zum Entfernen des Restes des Holzblocks 17 wird der Werkzeugschlitten 1 in die Ruheposition zurückgefahren. Es wird ein neuer Holzblock 17 eingespannt, und der Vorgang beginnt von vorne.

Während der gesamten Betriebszeit sind Mittel zum Kühlen der Gleitführungen 16 eingeschaltet. Diese Mittel sind z.B. eine Pumpe, ein Regelventil, ein Kühler mit Ventilator sowie Steuer- und Regeleinrichtungen.

## Patentansprüche

1. Furniermessermaschine
mit einem hin und her beweglichen Tisch (17) zum Aufspannen eines Holzblocks (19), wobei der Tisch (17) in Gleitführungen (16) mittels Gleitleisten (20) geführt ist,
und mit einem mit Messer (8) und Druckbalken (12) bestückten Werkzeugschlitten (1), der längs einer zur Bewegungsebene des Tisches (17) rechtwinkligen Linie relativ zu dieser Ebene hin und her beweglich ist,
**dadurch gekennzeichnet, daß** in jeder der Gleitführungen (16) zwei Kühlkanäle (21) oder Bohrungen angeordnet sind, durch die Kühlmittel durchleitbar ist.

2. Furniermessermaschine nach Anspruch 1 **dadurch gekennzeichnet, daß** die Durchflußmenge der Kühlflüssigkeit einstellbar ist.

3. Furniermessermaschine nach Anspruch 2, **dadurch gekennzeichnet, daß** eine Regelvorrichtung angeordnet ist.

4. Furniermessermaschine nach einem der Ansprüche 1 bis 3, **dadurch gekennzeichnet, daß** im Zu- oder Ablauf des Kühlmittels zu den Gleitführungen (16) ein Regelventil angeordnet ist.

5. Furniermessermaschine nach einem der Ansprüche 1 bis 3, **dadurch gekennzeichnet, daß** die Drehzahl einer Kühlmittelpumpe veränderbar ist.

## Claims

1. Veneer-slicing machine
comprising a table (17) which is movable in reciprocating fashion and serves for clamping a block of wood (19) thereon, the table (17) being guided on guide rails (16) by means of slide shoes (20),
and having a tool carriage (1) equipped with a blade (8) and a pressure plate (12) and movable in reciprocating fashion relative to the movement plane of the table (17) along a line at right angles to this plane,
**characterised in that** in each of the guide rails (16) there are arranged two cooling ducts (21) or bores, through which coolant can be conveyed.

2. Veneer-slicing machine according to Claim 1,
**characterised in that** the flow rate of the cooling fluid is adjustable.

3. Veneer-slicing machine according to Claim 2,
**characterised in that** a control device is provided.

4. Veneer-slicing machine according to one of Claims 1 to 3, **characterised in that** a control valve is arranged in the inlet or outlet of the coolant to the guide rails (16).

5. Veneer-slicing machine according to one of Claims 1 to 3, **characterised in that** the rotational speed of a coolant pump is variable.

## Revendications

1. Trancheuse pour feuilles de placage
avec une table (17) pouvant effectuer un mouvement de va et vient servant à serrer un bloc de bois (19), la table étant guidée dans des glissières (16) au moyen de guides coulissants (20),
et avec un chariot équipé d'une lame et d'une barre de pression (12), qui peut effectuer le long d'une ligne à angle droit par rapport au plan de mouvement de la table (17) un mouvement de va et vient par rapport à ce plan,
**caractérisé en ce que** deux canaux de refroidissement (21) ou forures par lequel l'agent de refroidissement peut être guidé sont disposés dans chacune des glissières (18).

2. Trancheuse pour feuilles de placage selon la revendication 1, **caractérisée en ce que** le débit de passage du liquide de refroidissement peut être réglé.

3. Trancheuse pour feuilles de placage selon la revendication 2, **caractérisée en ce qu'**un dispositif régulateur est en place.

4. Trancheuse pour feuilles de placage selon une des revendications 1 à 3, **caractérisée en ce qu'**une vanne de régulation est disposée dans le conduit d'amenée ou de sortie de l'agent de refroidissement par rapport aux glissières (18).

5. Trancheuse pour feuilles de placage selon une des revendications 1 à 3, **caractérisée en ce que** le régime d'une pompe d'agent de refroidissement peut être modifié.
